# EUROPÄISCHE PATENTSCHRIFT

(11) **EP 2 702 838 B1**
(45) Veröffentlichungstag und Bekanntmachung des Hinweises auf die Patenterteilung: **13.03.2019**
(21) Anmeldenummer: 12722679.3
(22) Anmeldetag: 30.04.2012
(51) Int. Cl.: H05B 39/04, H05B 33/08

(54) **ELEKTRONISCHES VORSCHALTGERÄT FÜR EIN BELEUCHTUNGSGERÄT**
ELECTRONIC BALLAST FOR AN ILLUMINATION DEVICE
BALLAST ÉLECTRONIQUE POUR UN APPAREIL D'ÉCLAIRAGE

(30) Priorität: 29.04.2011 DE 102011100003
(43) Veröffentlichungstag der Anmeldung: 05.03.2014
(73) Patentinhaber: Tridonic GmbH & Co. KG, 6851 Dornbirn (AT)
(72) Erfinder: BÖCKLE, Reinhard, 6841 Mäder (AT)
(74) Vertreter: Banzer, Hans-Jörg
(86) Internationale Anmeldenummer: PCT/EP2012/001854
(87) Internationale Veröffentlichungsnummer: WO 2012/146393

(56) Entgegenhaltungen:
- WO-A1-2010/150183
- US-A1- 2004 085 030
- US-A1- 2011 012 537
- US-A1- 2011 095 700

## Beschreibung

Die vorliegende Erfindung betrifft ein elektronisches Vorschaltgerät (EVG) für ein Beleuchtungsgerät.

Es ist bekannt, zur Helligkeitssteuerung eines Beleuchtungsgeräts Dimmer einzusetzen. Bei auf Grundlage von herkömmlichen Leuchtmitteln wie Glühbirnen arbeitenden Beleuchtungsgeräten kann die Helligkeitsregelung im Dimmer über einen Phasenanschnitt oder Phasenabschnitt der Versorgungsspannung des Beleuchtungsgeräts erfolgen. Dabei wird die Leistung des Beleuchtungsgeräts verringert, indem nach bzw. vor dem Nulldurchgang der Versorgungsspannung eine kurzzeitige Unterbrechung der Versorgungsspannung bewirkt wird, sodass abhängig von der Zeitdauer der Unterbrechung die Leistung des Beleuchtungsgeräts reduziert wird.

Weiterhin ist auch bekannt, Steuergeräte einzusetzen, bei welchen die Helligkeitssteuerung über spezielle Steuersignale erfolgt, die an das Beleuchtungsgerät übermittelt werden. Ein in dem Beleuchtungsgerät vorgesehenes EVG wertet diese Steuersignale aus und stellt die Helligkeit entsprechend ein. Diese Art von Steuerung eignet sich insbesondere für Leuchtgeräte, welche auf Leuchtmitteln in Form von Gasentladungslampen oder Leuchtdioden basieren.

Es ist weiterhin bekannt, ein EVG in einem Beleuchtungsgerät derart auszugestalten, dass ein effizienter Gleichspannungsbetrieb des Beleuchtungsgeräts ermöglicht wird, z.B. über eine batteriegestützte Notstromversorgung. Zu diesem Zweck kann ein Gleichspannungsanteil in der Versorgungsspannung des Beleuchtungsgeräts erfasst werden, und bei Überschreiten eines vorgegebenen Schwellenwerts für den Gleichspannungsanteil in einen Gleichspannungsbetrieb des Beleuchtungsgeräts gewechselt werden. Im Gleichspannungsbetrieb des Beleuchtungsgeräts kann von dem EVG auch eine vorgegebene Helligkeit des Beleuchtungsgeräts eingestellt werden.

Die US 2011/0012537 A1 beschreibt eine Treiberschaltung für ein LED-Beleuchtungsgerät, welche ein Tiefpassfilter und einen Spannung-Tastverhältnis-Konverter aufweist, um ein Betriebssignal für eine LED-Anordnung zu erzeugen.

Aufgabe der Erfindung ist, ein EVG für ein Beleuchtungsgerät bereitzustellen, welches die Übermittlung von Steuersignalen mit geringem Schaltungsaufwand ermöglicht.

Diese Aufgabe wird gelöst durch ein EVG gemäß Patentanspruch 1 sowie ein EVG gemäß Patentanspruch 12. Die abhängigen Patentansprüche definieren Weiterbildungen der Erfindung.

Erfindungsgemäß umfasst das EVG somit einen ersten und einen zweiten Versorgungsspannungsanschluss zur Aufnahme einer Versorgungsspannung des Beleuchtungsgeräts, eine integrierende Schaltung und eine differenzierende Schaltung. Die integrierende Schaltung ist zwischen den ersten und den zweiten Versorgungsspannungsanschluss gekoppelt und dazu ausgestaltet, ein Ausgangssignal zu erzeugen, welches einen Gleichspannungsanteil der Versorgungsspannung anzeigt. Die differenzierende Schaltung ist mit der integrierenden Schaltung gekoppelt und dazu ausgestaltet, ein Ausgangssignal zu erzeugen, welches auf die Versorgungsspannung modulierte Steuersignale anzeigt.

Auf diese Weise wird erreicht, dass die Erfassung der auf die Versorgungsspannung modulierte Steuersignale mit einem geringen Schaltungsaufwand ermöglicht wird. Insbesondere können Schaltungskomponenten von der integrierenden Schaltung und der differenzierenden Schaltung gemeinsam genutzt werden.

Weiterhin umfasst die integrierende Schaltung einen Spannungsteiler mit einem ersten Widerstand und einen zweiten Widerstand, welche in Reihe zwischen den ersten und den zweiten Versorgungsspannungsanschluss gekoppelt sind. Die differenzierende Schaltung ist mit einem Spannungsteilerabgriff zwischen dem ersten und dem zweiten Widerstand der integrierenden Schaltung gekoppelt. Bei dem erfindungsgemäßen EVG kann somit der Spannungsteiler der integrierenden Schaltung auf effiziente Weise genutzt werden, um sowohl ein Spannungssignal zur Verarbeitung in der integrierenden Schaltung als auch ein Spannungssignal zur Verarbeitung in der differenzierenden Schaltung aus der Versorgungsspannung abzuleiten.

Die integrierende Schaltung kann darüber hinaus einen dritten Widerstand und einen Kondensator umfassen, welche in Reihe zwischen den Spannungsteilerabgriff und ein Bezugspotential, z.B. Masse, gekoppelt sind. In diesem Fall kann das Ausgangssignal der integrierenden Schaltung aus einem Spannungsabfall über dem Kondensator der integrierenden Schaltung erzeugt werden und weist eine Charakteristik auf, welche einem zeitlichen Integral der Versorgungsspannung entspricht und auf effiziente Weise zur Erfassung eines Gleichspannungsanteils der Versorgungsspannung genutzt werden kann. Beispielsweise kann zu diesem Zweck das Ausgangssignal der integrierenden Schaltung mit einem Schwellenwert verglichen werden.

Darüber hinaus kann die integrierende Schaltung auch einen vierten Widerstand umfassen, welcher parallel zu dem Kondensator der integrierenden Schaltung gekoppelt ist. Der vierte Widerstand bewirkt in diesem Fall eine Entladung des Kondensators, so dass die Charakteristik des Ausgangssignals der integrierenden Schaltung einem zeitlich begrenzten Integral der Versorgungsspannung entspricht.

Gemäß einem Ausführungsbeispiel umfasst die differenzierende Schaltung ein Hochpassfilter mit einem ersten Widerstand und einem Kondensator, welche zwischen den Spannungsteilerabgriff der integrierenden Schaltung und ein Bezugspotential, z.B. Masse, gekoppelt sind. Mittels des Hochpassfilters können auf die Versorgungsspannung modulierte Steuersignale, welche typischerweise durch steile Signalflanken gekennzeichnet sind, auf effiziente Weise extrahiert werden.

Die differenzierende Schaltung kann darüber hinaus eine Diode und einen zweiten Widerstand umfassen, wobei die Diode und der zweite Widerstand parallel zu dem ersten Widerstand der differenzierenden Schaltung gekoppelt sind. In diesem Fall kann das Ausgangssignal der differenzierenden Schaltung aus einem Spannungsabfall über den zweiten Widerstand der differenzierenden Schaltung abgeleitet werden. Aufgrund der Diode können selektiv nur ansteigende Signalflanken der Steuersignale oder nur abfallende Signalflanken der Steuersignale erfasst werden. Dies ist insbesondere vorteilhaft, wenn die Steuersignale durch Phasenanschnitt bzw. Phasenabschnitt auf die Versorgungsspannung moduliert sind, wobei es sich versteht, dass ein Phasenanschnitt oder Phasenabschnitt jeweils eine steile Signalflanke, ansteigend oder abfallend, erzeugt.

Die differenzierende Schaltung kann darüber hinaus einen weiteren Widerstand umfassen, über welchen der Kondensator der differenzierenden Schaltung mit dem Spannungsteilerabgriff der integrierenden Schaltung gekoppelt ist. Mittels dieses weiteren Widerstands kann ein dem Kondensator der differenzierenden Schaltung zugeführter Strom auf geeignete Weise eingestellt werden, so dass sich eine für die Auswertung gewünschte Charakteristik des Ausgangssignals der differenzierenden Schaltung ergibt.

Gemäß einem Ausführungsbeispiel umfasst das elektronische Vorschaltgerät weiterhin einen Controller, welchem das Ausgangssignal der differenzierenden Schaltung zugeführt ist. Mittels des Controllers kann eine effiziente Auswertung des Ausgangssignals der differenzierenden Schaltung erfolgen, um die auf die Versorgungsspannung modulierten Steuersignale zu erfassen. Abhängig von den erfassten Steuersignalen, d.h. abhängig von dem Ausgangssignal der differenzierenden Schaltung, kann der Controller dann beispielsweise eine Helligkeitssteuerung und/oder eine Farbsteuerung des Beleuchtungsgeräts bewerkstelligen. Das Ausgangssignal der differenzierenden Schaltung kann beispielsweise einem Interrupt-Eingang des Controllers zugeführt sein, so dass Pulse in dem Ausgangssignal der differenzierenden Schaltung erfasst oder gezählt werden können. Darüber hinaus kann der Controller dazu ausgestaltet sein, einen zeitlichen Abstand von Pulsen in dem Ausgangssignal der differenzierenden Schaltung zu erfassen, was zur Unterdrückung von Störungen verwendet werden kann. Darüber hinaus kann der Controller dazu ausgestaltet sein, aus Steuersignalen digital codierte Informationen auszuwerten und für die Steuerung des Beleuchtungsgeräts zu verwenden. Der Controller ist ein integrierter Schaltkreis wie beispielsweise ein Microcontroller oder eine anwendungsspezifische Schaltung (ASIC).

Gemäß einem Ausführungsbeispiel sind die Steuersignale zur Phasenanschnitt und/oder Phasenabschnitt auf die Versorgungsspannung moduliert. Hierbei kann ein vorgegebener Phasenanschnitt oder Phasenabschnitt verwendet werden, durch dessen Vorhandensein oder Fehlen die Steuersignale codiert werden. Die Größe des Phasenanschnitts kann somit konstant sein und braucht in dem EVG nicht ausgewertet zu werden, was den Schaltungsaufbau in dem EVG vereinfacht. Darüber hinaus kann durch Verwendung eines fest vorgegebenen Phasenanschnitts bzw. Phasenabschnitts, dessen Größe möglichst gering ist, eine Verzerrung der Versorgungsspannung durch die Steuersignale begrenzt werden. Letzteres ermöglicht wiederum, dass ein einfacher Schaltungsaufbau verwendet werden kann, um aus der Versorgungsspannung geeignete Versorgungssignale für ein Leuchtmittel des Beleuchtungsgeräts zu erzeugen. Die Steuersignale werden vorzugsweise durch Phasenanschnitt und/oder Phasenabschnitt als digital codierte Informationen auf die Versorgungsspannung der Beleuchtungsgeräte moduliert.

Gemäß einem Ausführungsbeispiel weist das elektronische Vorschaltgerät für ein Beleuchtungsgerät einen ersten und einen zweiten Versorgungsspannungsanschluss zur Aufnahme einer Versorgungsspannung des Beleuchtungsgeräts auf. Das elektronische Vorschaltgerät weist eine integrierende Schaltung, welche zwischen den ersten und den zweiten Versorgungsspannungsanschluss gekoppelt ist und dazu ausgestaltet ist, ein Ausgangsignal zu erzeugen, welches einen Gleichspannungsanteil der Versorgungsspannung anzeigt. Weiterhin ist eine differenzierende Schaltung vorhanden, welche mit der integrierenden Schaltung gekoppelt ist und dazu ausgestaltet ist, ein Ausgangssignal zu erzeugen, welches auf die Versorgungsspannung modulierte Steuersignale anzeigt. Die integrierende Schaltung und die differenzierende Schaltung sind in einen Controller integriert sind und der Controller ist dazu ausgestaltet, abhängig von den beiden Ausgangssignalen das Beleuchtungsgerät entsprechend anzusteuern.

Ein Beleuchtungsgerät mit dem EVG kann, gegebenenfalls mit weiteren Beleuchtungsgeräten mit jeweils einem entsprechenden EVG, in einem System zum Einsatz kommen, welches darüber hinaus noch eine Vorrichtung zur Modulation der Versorgungsspannung mit den Steuersignalen umfasst, z.B. in Form eines Dimmers.

Weitere Merkmale, Vorteile und Funktionen von Ausführungsbeispielen der Erfindung werden aus der nachfolgenden detaillierten Beschreibung anhand der beigefügten Zeichnungen ersichtlich sein.
Fig. 1 zeigt ein System mit Beleuchtungsgeräten, welche jeweils mit einem EVG gemäß einem Ausführungsbeispiel der Erfindung versehen sind, und einer Vorrichtung zur Modulation einer Versorgungsspannung der Beleuchtungsgeräte mit Steuersignalen.
Fig. 2 zeigt schematisch eine Implementierung der Vorrichtung zur Modulation der Versorgungsspannung mit Steuersignalen.
Fig. 3 zeigt schematisch eine weitere Implementierung der Vorrichtung zur Modulation der Versorgungsspannung mit Steuersignalen.
Fig. 4 zeigt schematisch eine Implementierung eines EVG gemäß einem Ausführungsbeispiel der Erfindung.
Fig. 5 veranschaulicht anhand von Simulationsergebnissen die Arbeitsweise des EVG von Fig. 4.
Fig. 6 veranschaulicht beispielhaft Steuersignale, welche in einem EVG gemäß einem Ausführungsbeispiel der Erfindung ausgewertet werden können.

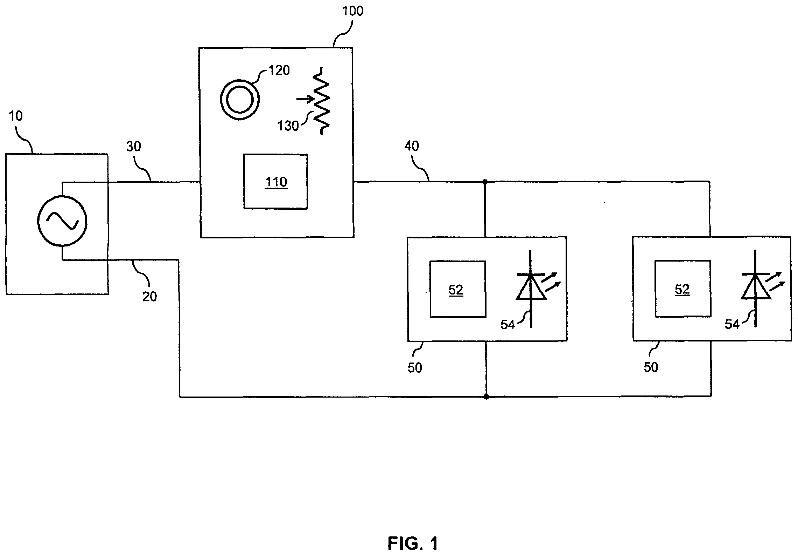

Fig. 1 veranschaulicht ein System mit Beleuchtungsgeräten 50 und einer Vorrichtung 100 zur Steuerung der Beleuchtungsgeräte 50. Das System umfasst weiterhin eine Netzspannungsquelle 10. Die Beleuchtungsgeräte 50 werden durch die Vorrichtung 100 gesteuert. Bei den nachfolgenden Erläuterungen soll davon ausgegangen werden, dass die Vorrichtung 100 zur Helligkeitssteuerung der Beleuchtungsgeräte 50 dient, d.h. als Dimmer ausgestaltet ist. Es versteht sich jedoch, dass die Vorrichtung 100 auch für andere oder zusätzliche Steuervorgänge einsetzbar sein könnte, z.B. für eine Farbsteuerung der Beleuchtungsgeräte 50.

Die Beleuchtungsgeräte 50 umfassen jeweils ein EVG 52 und Leuchtmittel 54, welche im vorliegenden Beispiel als Leuchtdiode veranschaulicht sind. Es versteht sich dabei, dass die Leuchtmittel 54 auf verschiedene Weisen implementiert sein könnten, z.B. durch eine oder mehrere Leuchtdioden, durch eine oder mehrere Gasentladungslampen oder aber durch einen oder mehrere herkömmliche Glühbirnen. Darüber hinaus kann auch eine beliebige Kombination der genannten Leuchtmittelarten zum Einsatz kommen. Über das EVG 52 erfolgt ein geeigneter Betrieb des jeweiligen Leuchtmittels 54. Zu diesem Zweck kann das EVG 52 beispielsweise ein geeignetes Netzteil umfassen, welches aus einer dem Beleuchtungsgerät zugeführten Versorgungsspannung zum Betrieb des Leuchtmittels 54 geeignete Versorgungssignale erzeugt.

Es versteht sich, dass die in Fig. 1 dargestellte Anzahl der Beleuchtungsgeräte 50 lediglich beispielhaft ist und das System auch mit nur einem Beleuchtungsgerät 50 oder einer beliebigen größeren Anzahl von Beleuchtungsgeräten 50 implementiert sein könnte.

Ein von der Netzspannungsquelle 10 ausgehender Netzspannungsleiter 20 ist mit den Beleuchtungsgeräten 50 verbunden. Ein weiterer von der Netzspannungsquelle 10 ausgehender Netzspannungsleiter 30 ist mit der Vorrichtung 100 verbunden. Im Folgenden soll davon ausgegangen werden, dass es sich bei dem Netzspannungsleiter 20 um einen Nullleiter handelt, während es sich bei dem Netzspannungsleiter 30 um einen Phasenleiter handelt. Die Vorrichtung 100 ist wiederum über einen Versorgungsspannungsleiter 40 mit den Beleuchtungsgeräten 50 verbunden. Die Beleuchtungsgeräte 50 sind parallel zwischen den Netzspannungsleiter 20 und den Versorgungsspannungsleiter 40 gekoppelt und nehmen ihre Versorgungsspannung über den Versorgungsspannungsleiter 40 und den Netzspannungsleiter 20 auf. Die Versorgungsspannung der Beleuchtungsgeräte wird diesen folglich über einerseits den Netzspannungsleiter 20 und andererseits über den Netzspannungsleiter 30, den Versorgungsspannungsleiter 40 und die dazwischen gekoppelte Vorrichtung 100 zugeführt. Da die Vorrichtung 100 lediglich mit einem der Netzspannungsleiter 20, 30 direkt verbunden ist, entspricht der in Fig. 1 dargestellte Aufbau einer sogenannten "One Wire"-Verschaltung. Eine Verbindung der Vorrichtung 100 mit der Netzspannungsleitung 20 ist nicht erforderlich, was den Installationsaufwand verringert.

Die Vorrichtung 100 umfasst eine Steuerschaltung 110 und einen Taster 120. Die Steuerschaltung 110 hat die Aufgabe, Steuersignale auf die Versorgungsspannung der Beleuchtungsgeräte 50 zu modulieren. Die Erzeugung der Steuersignale ist durch Betätigung des Tasters 120 beeinflussbar.

Beispielsweise können bei Betätigung des Tasters 120 Steuersignale erzeugt werden, welche die Beleuchtungsgeräte 50 zu einer Helligkeitsänderung veranlassen. Beispielsweise kann durch Betätigungen des Tasters die Helligkeit um jeweils eine Stufe erhöht werden, bis eine maximale Helligkeit erreicht ist, und anschließend durch Betätigungen des Tasters 120 die Helligkeit wiederum um jeweils eine Stufe verringert werden, bis eine minimale Helligkeit erreicht ist. Weiterhin könnte bei dauerhafter Betätigung des Tasters die Helligkeit automatisch auf periodische Weise verändert werden und die bei Loslassen des Tasters 120 eingestellte Helligkeit beibehalten werden. Es versteht sich, dass darüber hinaus vielfältige weitere Möglichkeiten zur Steuerung der Beleuchtungsgeräte 50 über den Taster 120 bestehen.

Die Vorrichtung 100 kann auch ein oder mehrere weitere Bedienelemente umfassen, was bei dem Beispiel von Fig. 1 durch ein Potentiometer 130 veranschaulicht ist. Das Potentiometer 130 kann beispielsweise mit einem Drehkopf gekoppelt sein, über welchen die gewünschte Helligkeit einstellbar ist. In diesem Fall kann die Vorrichtung 100 bei Betätigung des Tasters 120 die Stellung des Potentiometers 130 erfassen und über die Steuerschaltung 110 Steuersignale zur Einstellung der entsprechenden Helligkeit erzeugen und an die Beleuchtungsgeräte 50 übermitteln. Durch Kombination verschiedener Bedienelemente mit dem Taster 120 sind vielfältige Steuerungsvorgänge realisierbar. Beispielsweise könnte über das Potentiometer 130 eine Helligkeitssteuerung erfolgen, wohingegen über den Taster 120 eine Farbsteuerung erfolgt. Die Steuersignale werden vorzugsweise als digital codierte Informationen übermittelt.

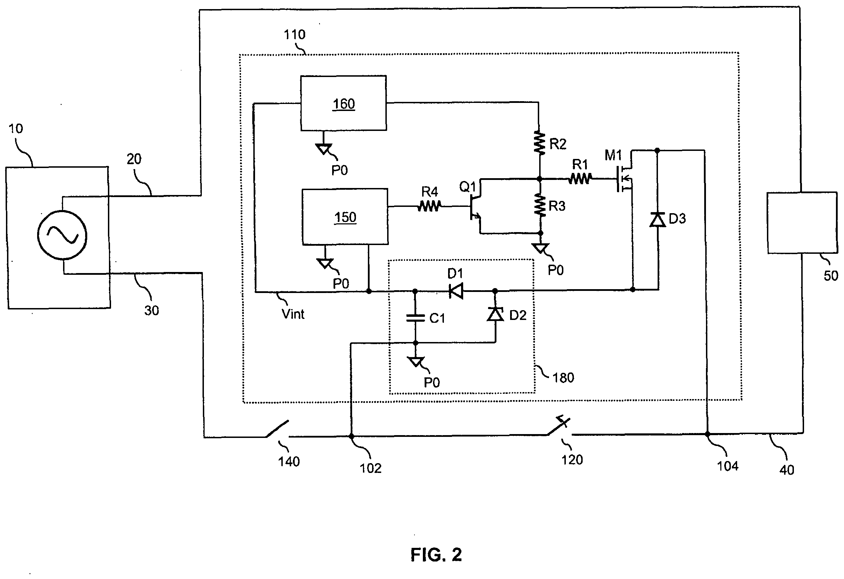

Fig. 2 veranschaulicht schematisch eine Implementierung der Steuerschaltung 110 in der Vorrichtung 100 von Fig. 1. In Fig. 2 ist beispielhaft lediglich ein Beleuchtungsgerät 50 dargestellt, welches einen Lastwiderstand RL aufweist. Es versteht sich jedoch, dass wie oben erläutert auch weitere Beleuchtungsgeräte vorhanden sein könnten. Darüber hinaus veranschaulicht Fig. 2 auch einen Netzschalter 140, bei welchem es sich um ein weiteres Bedienelement der Vorrichtung 100 handeln kann, oder um einen separat von der Vorrichtung 100 vorgesehenen Schalter.

Wie in Fig. 2 dargestellt, umfasst die Steuerschaltung 110 einen Eingang 102, welcher der Verbindung mit der Netzspannungsleitung 30 dient, und einen Ausgang 104, welcher der Verbindung mit der Versorgungsspannungsleitung 40 dient. Der Taster 120 ist zwischen den Eingang 102 und den Ausgang 104 gekoppelt, sodass bei Betätigung des Tasters 120 der Eingang 102 und der Ausgang 104 elektrisch überbrückt werden. Der Netzschalter 140 ist zwischen die Netzspannungsquelle 10 und den Eingang 102 gekoppelt.

Die Steuerschaltung 110 ist dazu ausgestaltet, die Modulation der Versorgungsspannung mit den Steuersignalen mittels eines Transistors M1 zu bewerkstelligen. Der Transistor M1 wirkt als steuerbarer Schalter. Der Transistor M1 ist derart zwischen den Eingang 102 und den Ausgang 104 der Steuerschaltung 110 gekoppelt, dass ein Betriebsstrom des Beleuchtungsgeräts 50 durch den Transistor M1 fließt. Durch Ansteuerung des Transistors M1 kann folglich die Versorgungsspannung mit den Steuersignalen moduliert werden. In dem dargestellten Beispiel handelt es sich bei dem Transistor M1 um einen Feldeffekttransistor, insbesondere um einen Feldeffekttransistor vom MOSFET-Typ. Es versteht sich jedoch, dass auch andere Transistortypen verwendet werden könnten.

Weiterhin umfasst die Steuerschaltung 110 zur Erzeugung der Steuersignale einen Controller 150, einen DC/DC-Wandler 160 sowie einen Verstärkerschaltung mit Widerständen R1, R2, R3, R4 und einen Transistor Q1, die auf die in Fig. 2 dargestellte Weise zwischen einen Ausgang des Controllers 150 und einen Steueranschluss des Transistors M1 gekoppelt sind. Die Verstärkerschaltung dient der Verstärkung von Ausgangssignalen des Controllers 150 auf eine zur Ansteuerung des Transistors M1 geeignete Signalstärke. Der DC/DC-Wandler 160 liefert eine für den Betrieb der Verstärkerschaltung erforderliche Spannung, beispielsweise eine Gleichspannung von 12-15 V.

Bei dem dargestellten Ausführungsbeispiel handelt es sich bei dem Transistor Q1 um einen Bipolartransistor, beispielsweise ein npn-Transistor. Die Widerstände R1, R2, R3 und R4 sind entsprechend den verwendeten Signalpegeln geeignet dimensioniert. Weiterhin umfasst die Steuerschaltung 110 bei der in Fig. 2 dargestellten Implementierung eine Versorgungsschaltung 180, welche aus einer Spannung, welche zwischen dem Eingang 102 und dem Ausgang 104 der Steuerschaltung 110 abfällt, eine interne Versorgungsspannung der Steuerschaltung 110 erzeugt. Diese interne Versorgungsspannung wird für den Betrieb des Controllers 150, des DC/DC-Wandlers 160 und der Verstärkerschaltung verwendet.

Wie dargestellt umfasst die Versorgungsschaltung 180 eine Diode D1, eine weitere Diode D2 und einen Kondensator C1. Bei der Diode D2 handelt es sich um eine ZenerDiode. Die Diode D2 ist in Reihe mit dem Transistor M1 gekoppelt, sodass der Betriebsstrom des Beleuchtungsgeräts 50 bei betätigtem Taster 20 durch die Diode D2 fließt. Der Kondensator C1 ist mit der Diode D1 parallel zu der Diode D2 gekoppelt, sodass der Kondensator C1 durch einen Spannungsabfall über der Diode D2 geladen wird, was aufgrund der Diode D1 während der negativen Halbwelle der Versorgungsspannung erfolgt. Bei der Diode D1 kann es sich um eine Siliziumdiode handeln.

Mittels des Kondensators C1 werden die zeitlichen Variationen des Spannungsabfalls über der Diode D2 ausgemittelt und es erfolgt eine Energiespeicherung, sodass die durch die Versorgungsschaltung 180 erzeugte interne Versorgungsspannung Vint im Wesentlichen eine Gleichstromcharakteristik aufweist. Der Kondensator C1 kann beispielsweise im Bereich von einigen µF dimensioniert sein. Bei der in Fig. 2 dargestellten Implementierung ist ein Gleichspannungsreferenzpunkt P0 an einem mit dem Eingang 102 der Steuerschaltung 110 verbundenen Anschluss des Kondensators C1 ausgebildet.

Weiterhin umfasst die Steuerschaltung 110 bei dem in Fig. 2 dargestellten Ausführungsbeispiel eine weitere Diode D3, welche wie in Fig. 2 dargestellt parallel zu dem Transistor M1 geschaltet ist. Bei der Diode D3 kann es sich um eine Siliziumdiode handeln.

Wird bei dem in Fig. 2 dargestellten Ausführungsbeispiel der Netzschalter 140 geschlossen, liegt im nicht betätigten Zustand des Tasters 120 die von der Netzspannungsquelle 10 gelieferte Netzspannung unmittelbar als Versorgungsspannung an dem Beleuchtungsgerät 50 an. Dies liegt daran, dass im nicht betätigten Zustand des Tasters 120 dieser den Eingang 102 und den Ausgang 104 der Steuerschaltung 110 elektrisch überbrückt, sodass die Steuerschaltung 110 nicht mit Energie versorgt wird. Auf diese Weise wird eine Leistungsaufnahme der Steuerschaltung 110 im nicht betätigten Zustand des Tasters 120 vermieden.

Im betätigten Zustand des Tasters 120, d.h. wenn der Taster gedrückt wird, wird jedoch die elektrische Überbrückung des Eingangs 102 und des Ausgangs 104 der Steuerschaltung 110 unterbrochen, sodass der Betriebsstrom des Beleuchtungsgeräts 50 über den Eingang 102 und den Ausgang 104 der Steuerschaltung 110 durch die Steuerschaltung 110 fließt. Insbesondere fließt der Betriebsstrom durch die Diode D2, den Transistor M1 und die parallel zu dem Transistor M1 geschaltete Diode D3.

In diesem Zustand wird der Kondensator C1 durch den Spannungsabfall über der Diode D2 geladen und speichert Energie zur Erzeugung der internen Versorgungsspannung Vint. Dies geschieht aufgrund der in Fig. 2 dargestellten Polaritäten der Dioden D1 und D2 während der negativen Halbwelle. Durch die interne Versorgungsspannung Vint werden der Controller 150 und der DC/DC-Wandler 160 mit Energie versorgt, sodass die Steuersignale entsprechend der Programmierung des Controllers 150 auf die Versorgungsspannung moduliert werden.

Beispielsweise kann der Controller 150 die Stellung eines Potentiometers erfassen, z.B. des Potentiometers 130 in Fig. 1, und die Steuersignale entsprechend der erfassten Stellung des Potentiometers erzeugen, und vorzugsweise als digital codierte Informationen übermitteln. Es ist jedoch auch möglich, lediglich die Information "Taster gedrückt" über die Steuersignale an das Beleuchtungsgerät 50 zu übertragen.

Mittels der in Fig. 2 dargestellten Implementierung der Steuerschaltung 110 können Steuersignale durch Phasenanschnitt auf die Versorgungsspannung moduliert werden. Die Größe des Phasenanschnitts kann dabei mittels des Controllers 150 eingestellt werden. Darüber hinaus kann der Controller 150 auch bei gedrücktem Taster 120 bewirken, dass in bestimmten Halbwellen kein Phasenanschnitt erfolgt, so dass über die Steuersignale digital codierte Informationen übermittelt werden können. Beispielsweise kann das Vorhandensein des Phasenanschnitts einen digitalen Wert "1" codieren, wohingegen das Fehlen des Phasenanschnitts einen digitalen Wert "0" codieren kann. Die Steuersignale können jedoch auch auf andere Art und Weise codiert werden, z.B. durch Phasenabschnitt, d.h. durch Ansteuerung des Transistors M1 bei einem negativen Nulldurchgang der Versorgungsspannung. Darüber hinaus kann die Ansteuerung des Transistors M1 auch zu anderen Zeitpunkten erfolgen, so dass die Steuersignale beispielsweise pulsartig auf die Versorgungsspannung moduliert werden. Wenn beispielsweise die Ansteuerung des Transistors M1 im Bereich des Scheitelpunkts einer Halbwelle erfolgt, können Informationen sowohl über eine ansteigende Signalflanke des auf die Halbwelle modulierten Pulses als auch über eine abfallende Signalflanke des auf die Halbwelle modulierten Pulses übermittelt werden.

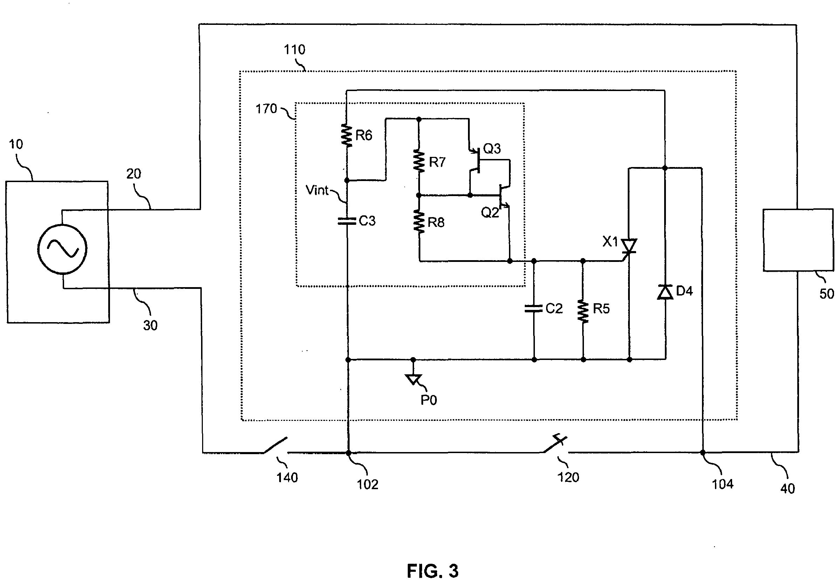

Fig. 3 veranschaulicht schematisch eine weitere beispielhafte Implementierung der Steuerschaltung 110. Die in Fig. 3 dargestellte Implementierung der Steuerschaltung 110 bietet gegenüber der Implementierung von Fig. 2 einen vereinfachten Aufbau und verzichtet insbesondere auf den Controller 150 und den DC/DC-Wandler. Anstelle dessen ist eine Triggerschaltung 170 vorgesehen, über welche die Größe eines fest vorgegebenen Phasenanschnitts definiert ist. Weiterhin ist bei der Implementierung von Fig. 3 als steuerbarer Schalter anstelle des Transistors M1 ein Thyristor X1 vorgesehen.

Bei der in Fig. 3 dargestellten Implementierung der Steuerschaltung 110 ist der Thyristor X1 zwischen den Eingang 102 und den Ausgang 104 der Steuerschaltung 110 gekoppelt, sodass bei gedrücktem Taster 120 der Betriebsstrom des Beleuchtungsgeräts 50 durch den Thyristor fließt. Eine Diode D4 ist parallel zu dem Thyristor X1 gekoppelt. Wie bei der Diode D3 von Fig. 2 kann es sich bei der Diode D4 um eine Siliziumdiode handeln.

Ein Steueranschluss des Thyristors X1 ist mit einem Ausgang der Triggerschaltung 170 verbunden. Weiterhin sind ein Kondensator C2 und ein Widerstand R5 parallel zwischen den Steueranschluss des Thyristors X1 und den Eingang 102 der Steuerschaltung 110 gekoppelt.

Die Triggerschaltung 170 umfasst einen Kondensator C3 und einen Widerstand R6, welche wie in Fig. 3 dargestellt in Reihe zwischen den Eingang 102 und den Ausgang 104 der Steuerschaltung 110 gekoppelt sind. Der Kondensator C3 wird folglich durch einen Spannungsabfall zwischen dem Eingang 102 und dem Ausgang 104 der Steuerschaltung 110, insbesondere durch einen Spannungsabfall über den Thyristor X1 und der Diode D4, geladen. Auf diese Weise wird bei der Implementierung der Steuerschaltung 110 von Fig. 3 eine interne Versorgungsspannung Vint zum Betrieb der Triggerschaltung 170 und zur Erzeugung der Ansteuerungssignale für den Thyristor X1 erzeugt.

Wie dargestellt umfasst die Triggerschaltung 170 Widerstände R7 und R8 sowie Transistoren Q2 und Q3. Die Widerstände R7 und R8 sind in Reihe angeordnet zwischen einem Schaltungsknoten zwischen dem Kondensator C3 und dem Widerstand R6, an welchem die interne Versorgungsspannung Vint anliegt, und dem Steueranschluss des Thyristors X1. Ein Stromanschluss des Transistors Q3 ist mit dem Schaltungsknoten zwischen dem Kondensator C3 und dem Widerstand R6 verbunden, wohingegen ein weiterer Stromanschluss des Transistors Q3 mit einem Schaltungsknoten zwischen dem Widerstand R7 und dem Widerstand R8 verbunden ist. Ein Steueranschluss des Transistors Q3 ist mit einem Stromanschluss des Transistors Q2 verbunden, und ein weiterer Stromanschluss des Transistors Q2 ist mit dem Steueranschluss des Thyristors X1 verbunden. Ein Steueranschluss des Transistors Q2 ist mit dem weiteren Stromanschluss des Transistors Q3 und dem Schaltungsknoten zwischen dem Widerstand R7 und dem Widerstand R8 verbunden. Bei der in Fig. 3 dargestellten Implementierung handelt es sich bei dem Transistor Q2 um einen npn-Bipolartransistor und bei dem Stromanschluss und dem weiteren Stromanschluss dieses Transistors handelt es sich wie in Fig. 3 dargestellt um einen Kollektor bzw. Emitter des Transistors, während es sich bei dem Steueranschluss um eine Basis des Transistors handelt. Weiterhin handelt es sich bei der Implementierung von Fig. 3 bei dem Transistor Q3 um einen pnp-Bipolartransistor und bei dem Stromanschluss und dem weiteren Stromanschluss dieses Transistors handelt es sich um einen Emitter bzw. einen Kollektor des Transistors, während es sich bei dem Steueranschluss dieses Transistors um eine Basis des Transistors handelt.

Die Dimensionierung der Komponenten der Triggerschaltung 170 ist entsprechend der gewünschten Größe des zu erzeugenden Phasenanschnitts gewählt. Beispielsweise kann ein Phasenanschnitt von ungefähr 3 ms eingestellt werden, was in etwa 15 % der Periodendauer der Versorgungsspannung entspricht.

Mittels der in Fig. 3 dargestellten Implementierung der Steuerschaltung 110 können Steuersignale auf ähnliche Weise durch Phasenanschnitt auf die Versorgungsspannung moduliert werden wie mittels der Implementierung von Fig. 2. Im Vergleich zu der Implementierung von Fig. 2 kann über die Steuersignale jedoch lediglich angezeigt werden, ob der Taster 120 betätigt ist oder nicht. Insbesondere zeigt das Vorhandensein des Phasenanschnitts einen betätigten Zustand des Tasters 120 an.

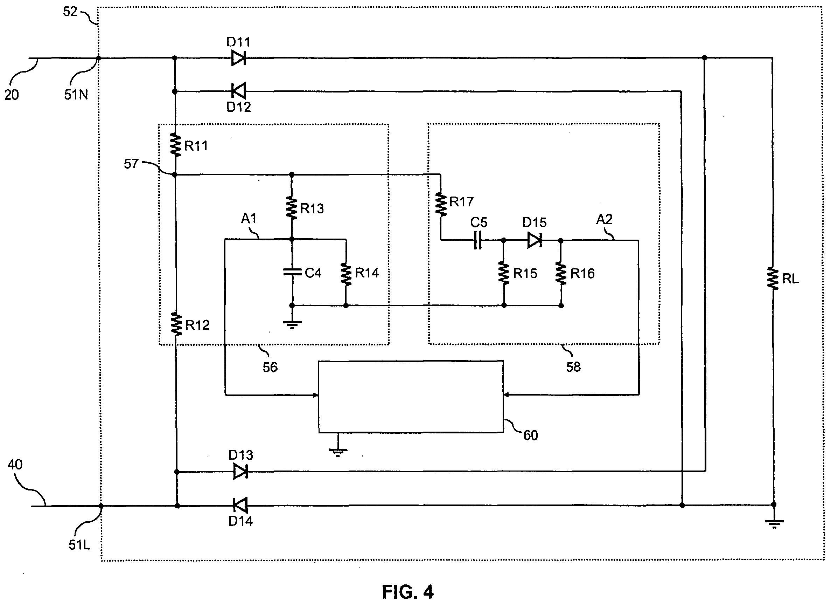

Fig. 4 veranschaulicht schematisch eine Implementierung des EVG 52 in dem Beleuchtungsgerät 50. In Fig. 4 ist zur Vereinfachung der Darstellung das Leuchtmittel 54 mittels des Lastwiderstands RL dargestellt, wobei es sich versteht, dass der Lastwiderstand RL neben den Leuchtmitteln selbst auch etwaige zur Ansteuerung der Leuchtmittel vorgesehene Elektronik, z.B. Treiberschaltungen, Vorwiderstände, Spannungswandler, Regeleinrichtungen oder dergleichen darstellen kann. Darüber hinaus versteht es sich, dass bei der in Fig. 4 dargestellten Implementierung des EVG 52 weitere Komponenten vorgesehen sein können, auf deren Darstellung und Erläuterung hier zum Zwecke der Übersichtlichkeit jedoch verzichtet wird.

Wie dargestellt umfasst das EVG 52 bei der in Fig. 4 dargestellten Implementierung eine Brückengleichrichterschaltung aus Dioden D11, D12, D13 und D14, welche zwischen einen ersten Versorgungsspannungsanschluss 51N und einen zweiten Versorgungsspannungsanschluss 51L des EVG 52 gekoppelt ist. Der Versorgungsspannungsanschluss 51N ist mit dem Netzspannungsleiter 20 gekoppelt, wohingegen der Versorgungsspannungsanschluss 51L mit dem Versorgungsspannungsleiter 40 gekoppelt ist. Durch die oben erläuterte Arbeitsweise der Vorrichtung 100 können somit Steuersignale auf die an den Versorgungsspannungsanschlüssen 51N, 51L aufgenommene Versorgungsspannung moduliert sein. Der Lastwiderstand RL ist wie in Fig. 4 dargestellt sowohl zwischen die Dioden D11 und D14 als auch zwischen die Dioden D13 und D12 gekoppelt, so dass sich einerseits ein Strompfad von dem Versorgungsspannungsanschluss 51N über die Diode D11, den Lastwiderstand RL und die Diode D14 zu dem Versorgungsspannungsanschluss 51L ergibt und sich weiterhin ein Strompfad von dem Versorgungsspannungsanschluss 51L über die Diode D13, den Lastwiderstand RL und die Diode D12 zu dem Versorgungsspannungsanschluss 51N ergibt.

Weiterhin umfasst das EVG 52 bei der in Fig. 4 dargestellten Implementierung eine integrierende Schaltung 56, eine differenzierende Schaltung 58 und einen Controller 60.

Die integrierende Schaltung 56 dient der Erfassung eines Gleichspannungsanteils in der über die Versorgungsspannungsanschlüsse 51N, 51L aufgenommenen Versorgungsspannung. Insbesondere kann über die integrierende Schaltung 56 erfasst werden, ob die Versorgungsspannung als Gleichspannung zugeführt wird, z.B. im Falle eines batteriegestützten Notbetriebs. Die integrierende Schaltung erzeugt ein Ausgangssignal A1, welches dem Controller 60 zugeführt ist. Durch Auswertung des Ausgangssignals A1 kann der Controller 60 feststellen, ob die Versorgungsspannung als Gleichspannung zugeführt wird und den Betrieb des Beleuchtungsgeräts 50, insbesondere des EVG 52, entsprechend anpassen, z.B. durch Einstellen einer vorgegebenen Helligkeit von beispielsweise 70%. Das Ausgangssignal A1 kann beispielsweise einem Komparatoreingang des Controllers 60 zugeführt sein, und der Controller 60 kann das Ausgangssignal A1 mit einem vorgegebenen Schwellenwert vergleichen, um zu bestimmen, ob die Versorgungsspannung als Gleichspannung zugeführt wird.

Die differenzierende Schaltung 58 dient der Erfassung von auf die Versorgungsspannung modulierten Steuersignalen. Zu diesem Zweck erzeugt die differenzierende Schaltung 58 ein Ausgangssignal A2, welches die auf die Versorgungsspannung modulierten Steuersignale anzeigt, z.B. in Form von Pulsen. Das Ausgangssignal A2 ist dem Controller 60 zugeführt, welcher durch Auswertung des Ausgangssignals A2 das Vorhandensein von Steuersignalen erfasst und in den Steuersignalen codierte Informationen auswertet. Über die Steuersignale kann beispielsweise die Information übertragen werden, ob der Taster 120 der Vorrichtung 100 gedrückt ist oder nicht. Darüber hinaus können durch komplexere digitale Codierung jedoch auch weitere Informationen übertragen werden. Das Ausgangssignal A2 kann einem Interrupt-Eingang des Controllers 60 zugeführt sein. Durch Auswertung des Ausgangssignals A1 kann der Controller 60 das Vorhandensein von Steuersignalen erfassen und entsprechend der in den Steuersignalen codierte Informationen den Betrieb des Beleuchtungsgeräts 50, insbesondere des EVG 52, entsprechend anpassen, z.B. durch Einstellen einer vorgegebenen Heiligkeit und / oder Farbe.

Bei der Implementierung von Fig. 4 ist durch Kopplung der differenzierenden Schaltung 58 mit der integrierenden Schaltung 56 ein besonders einfacher Schaltungsaufbau realisiert. Insbesondere können auf diese Weise Komponenten von der integrierenden Schaltung 56 und der differenzierenden Schaltung 58 gemeinsam genutzt werden. Dies soll nachfolgend näher erläutert werden.

Wie dargestellt umfasst die integrierende Schaltung einen Spannungsteiler mit einem Widerstand R11 und einem Widerstand R12, welche in Reihe zwischen dem Versorgungsspannungsanschluss 51N und den Versorgungsspannungsanschluss 51L gekoppelt sind. Zwischen den Widerständen R11 und R12 ist ein Spannungsteilerabgriff 57 vorgesehen. Durch geeignete Dimensionierung der Widerstände R11 und R12 kann an dem Spannungsteilerabgriff 57 eine geeignete Signalamplitude eingestellt werden. Wenn beispielsweise die Versorgungsspannung eine Amplitude im Bereich von 300 V aufweist, kann durch Dimensionierung der Widerstände R11 und R12 im Bereich von einigen MΩ die Amplitude an dem Spannungsteilerabgriff 57 auf unter 10 V eingestellt werden.

Weiterhin umfasst die integrierende Schaltung 56 einen Widerstand R13 und einen Kondensator C4, welche wie dargestellt in Reihe zwischen den Spannungsteilerabgriff 57 und Masse gekoppelt sind. Das von der integrierenden Schaltung 56 erzeugte Ausgangssignal A1 entspricht dem Spannungsabfall über dem Kondensator C4 und weist somit eine Charakteristik auf, welche einem zeitlichen Integral der Versorgungsspannung entspricht. Weiterhin ist ein Widerstand R14 parallel zu dem Kondensator C4 gekoppelt. Durch geeignete Dimensionierung des Widerstands R13, des Kondensators C4 und des Widerstands R14 können Integrationsparameter eingestellt werden, z.B. ein Proportionalitätsfaktor zwischen dem Integral der Versorgungsspannung und dem Ausgangssignal A1 sowie ein Integrationszeitfenster.

Wie in Fig. 4 dargestellt, ist die differenzierende Schaltung 58 mit dem Spannungsteilerabgriff 57 der integrierenden Schaltung 56 gekoppelt. Die differenzierende Schaltung umfasst ein Hochpassfilter mit einem Kondensator C5 und einem Widerstand R15, die in Reihe zwischen den Spannungsteilerabgriff 57 und Masse gekoppelt sind. Ein Spannungsabfall über dem Widerstand R15 entspricht somit der hochpassgefilterten Spannung am Spannungsteilerabgriff 57. Darüber hinaus umfasst bei der dargestellten Implementierung die differenzierende Schaltung eine Diode D15 und einen Widerstand R16, welche parallel zu dem Widerstand R15 gekoppelt sind. Ein Spannungsabfall über dem Widerstand R16 entspricht somit der hochpassgefilterten Spannung an dem Spannungsteilerabgriff 57, wobei jedoch aufgrund der Diode D15 eine Polarität der hochpassgefilterten Spannung ausgeblendet wird. Das Ausgangssignal A2 der differenzierenden Schaltung entspricht dem Spannungsabfall über dem Widerstand R16 und weist eine Charakteristik auf, welche aufgrund des Zusammenwirkens des Hochpassfilters und der Diode D15 Pulse zeigt, wenn in der Versorgungsspannung eine steil ansteigende Signalflanke auftritt.

Es versteht sich hierbei, dass durch Verwendung der Diode D15 mit umgekehrter Polarität ebenso eine Empfindlichkeit auf steil abfallende Signalflanken erreicht werden könnte.

Außerdem umfasst bei der dargestellten Implementierung die differenzierende Schaltung 58 einen Widerstand R17, welcher zwischen den Kondensator C5 und den Spannungsteilabgriff 57 gekoppelt ist. mittels des Widerstands R17 kann ein Ladestrom des Kondensators C5 geeignet eingestellt werden.

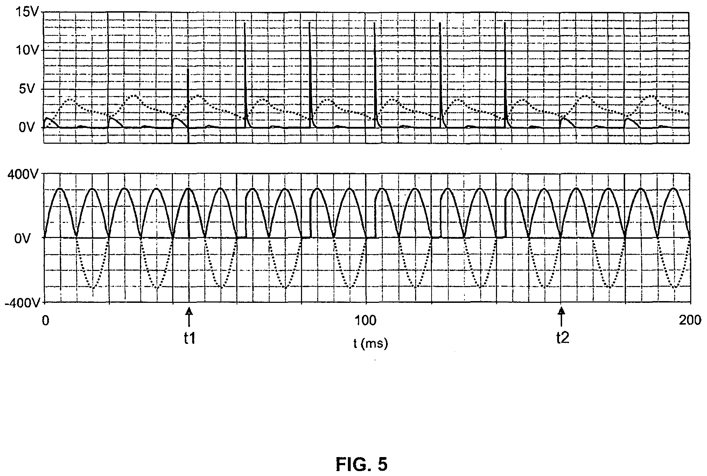

Fig. 5 zeigt anhand der Implementierung von Fig. 4 gewonnene Simulationsergebnisse. Bei der Simulation wurde davon ausgegangen, dass die Versorgungsspannung mit einer Amplitude von 300 V den Versorgungsspannungsanschlüssen 51N, 51L zugeführt wird. Schließlich wurde davon ausgegangen, dass zur Erzeugung der Steuersignale in der Vorrichtung 100 zu einem Zeitpunkt t1 = 45 ns der Taster 120 gedrückt wurde und zu einem Zeitpunkt t2 = 160 ns der Taste 120 wieder losgelassen wurde.

In dem oberen Diagramm von Fig. 5 ist der sich aus der Simulation ergebende Spannungsabfall über dem Widerstand R16, d.h. das Ausgangssignal A2, durch eine durchgezogene Linie dargestellt. Darüber hinaus ist der Spannungsabfall über dem Kondensator C4, d.h. das Ausgangssignal A1, durch eine gepunktete Linie dargestellt. In dem unteren Diagramm von Fig. 5 veranschaulicht eine durchgezogene Linie den Verlauf der an dem Lastwiderstand RL anliegenden Spannung, wohingegen eine gepunktete Linie den Verlauf der an den Versorgungsspannungsanschlüssen 51N, 51L anliegenden Versorgungsspannung zeigt.

Es ist erkennbar, dass bei gedrücktem Taster 120 die positive Halbwelle der Versorgungsspannung mit einem konstanten Phasenanschnitt versehen wird, welcher ca. 3 ms bzw. etwa 15% der Periodendauer der Versorgungsspannung entspricht. Das Vorhandensein des Phasenanschnitts bewirkt in dem Ausgangssignal A2 der differenzierenden Schaltung einen ausgeprägten Puls, welcher der durch den Phasenanschnitt verursachten steil ansteigenden Signalflanke in der positiven Halbwelle entspricht. Da die Versorgungsspannung als Wechselspannung zugeführt wird und somit kein Gleichspannungsanteil vorhanden ist, weist das Signal A1 einen geringen Signalpegel mit geringfügigen Variationen auf. Während der Taster 120 gedrückt ist, d.h. bei Vorhandensein des Phasenanschnitts in der Versorgungsspannung, ist für das Ausgangssignal A1 eine leichte Verschiebung nach unten und eine leichte Verringerung der Variationen zu erkennen, was jedoch keine Auswirkung auf eine zuverlässige Erfassung des Gleichspannungsanteils hat.

Bei der in Fig. 4 dargestellten Implementierung können somit die auf die Versorgungsspannung modulierten Steuersignale zuverlässig und effizient erfasst werden, ohne die Erfassung des Gleichspannungsanteils in der Versorgungsspannung nachteilig zu beeinflussen.

Die auf die Versorgungsspannung modulierten Steuersignale können in dem EVG 52 auf vielfältige Weise zur Bewerkstelligung von Steuervorgängen genutzt werden. beispielsweise kann bei jedem Puls des Ausgangssignals A2 die Helligkeit um eine Stufe erhöht oder erniedrigt werden. Weiterhin können alternativ oder zusätzlich über die Steuersignale digital codierte Informationen an das EVG 52 übermittelt werden.

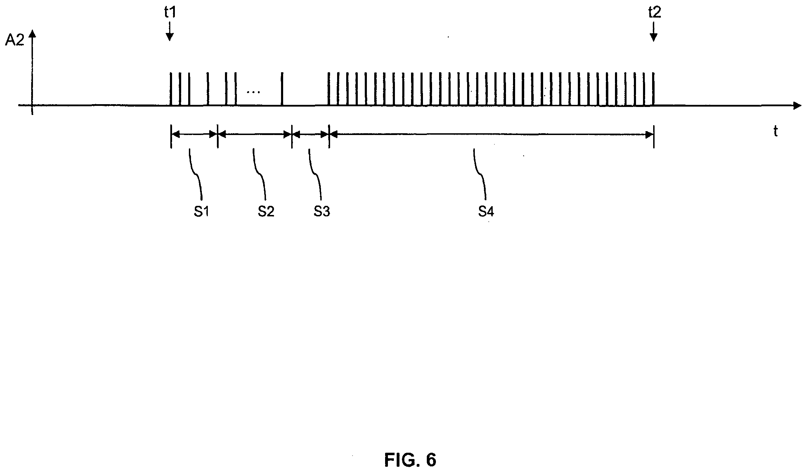

Ein Beispiel für zur Übermittlung von digitalen Informationen genutzte Steuersignale ist in Fig. 6 dargestellt. In Fig. 6 entspricht der Zeitpunkt t1 wiederum dem Drücken des Tasters 120 und der Zeitpunkt t2 dem Loslassen des Tasters 120. Es ist erkennbar, dass das Ausgangssignal A2 Pulse zeigt, während der Taster 120 gedrückt ist. Wie im Zusammenhang mit Fig. 2 erläutert, kann die Modulation der Versorgungsspannung mit den Steuersignalen nur bei bestimmten Halbwellen erfolgen, so dass in den Steuersignalen Informationen digital codiert werden können. Dies kann in der Vorrichtung 100 mittels eines Controllers, z.B. des Controllers 150, bewerkstelligt werden.

Die in Fig. 6 beispielhaft dargestellten Steuersignale sind in verschiedene Sequenzen S1, S2, S3 und S4 unterteilt. Bei der Sequenz S1 handelt es sich um eine Startsequenz, durch welche dem EVG 52 die Verwendung einer komplexeren digitalen Codierung angezeigt werden kann. Die Startsequenz kann beispielsweise an einer vorgegebenen Position einer "0" beinhalten. Anhand der Startsequenz kann das EVG 52 unterscheiden, ob in der Vorrichtung 100 eine Steuerschaltung mit einem Controller verwendet wird, wie beispielsweise bei der Implementierung von Fig. 2, oder eine vereinfachte Steuerschaltung wie bei der Implementierung von Fig. 3, welche nicht in der Lage ist, gezielt eine "0" in die Sequenz der Steuersignale einzufügen. Beispielsweise kann die Sequenz "1101" als Startsequenz verwendet werden. In der Sequenz S2, welche beispielsweise eine Länge von 8 Bit aufweisen kann, können digitale Informationen codiert werden, beispielsweise ein Steuerbefehl oder dergleichen. Durch die in der Sequenz S2 codierten Informationen kann dem EVG 52 auch angezeigt werden, auf welche Weise nachfolgend übermittelte Steuersignale zu verwenden sind.

Bei der Sequenz S3 kann es sich um eine Stoppsequenz handeln, durch welche das Ende der digital codierten Informationen angezeigt wird.

Bei der Sequenz S4 kann es sich wiederum um eine Sequenz von Pulsen zur schrittweise Erhöhung bzw. Erniedrigung der Helligkeit des Beleuchtungsgeräts 50 handeln, d.h. jeder Puls in der Sequenz S4 kann beispielsweise der Erhöhung oder Verringerung der Helligkeit um eine Stufe entsprechen.

Indem über die Steuersignal digital codierte Informationen übermittelt werden, sind vielfältige Steuerfunktionen in dem EVG 52 auf einfache Weise realisierbar. Beispielsweise könnte dem EVG 52 durch die in der Sequenz S2 codierten Informationen angezeigt werden, dass die Pulse in der Sequenz S4 Information über einen gewünschten Helligkeitswert oder Farbwert enthalten. Beispielsweise könnte dem EVG 52 auch durch die in der Sequenz S2 codierten Informationen angezeigt werden, dass die Pulse in der Sequenz S4 zur Einstellung der Helligkeit für eine sogenannte Korridorfunktion verwendet werden sollen. Bei der Korridorfunktion kann das Beleuchtungsgerät 50 beispielsweise durch einen Bewegungsmelder aktiviert werden und dann nach Ablauf einer vorgegebenen Zeitspanne auf einen vorgegebenen Helligkeitswert gedimmt werden. Dieser vorgegebene Helligkeitswert könnte dem EVG 52 nach entsprechender Anzeige in den Informationen der Sequenz S2 über die Sequenz S4 übermittelt werden.

Es versteht sich, dass zur Realisierung dieser und anderer komplexerer Steuerfunktionalitäten die Vorrichtung 100 zur Erzeugung der Steuersignale mit entsprechenden Bedienelementen ausgestattet sein kann.

Die im Vorangegangenen beschriebenen Konzepte zur Erfassung von Steuersignalen in einem EVG können mit geringem Schaltungsaufwand realisiert werden. Gleichzeitig ist eine Vielfalt von Steuerungsmöglichkeiten in dem EVG möglich, insbesondere wenn in dem EVG ein Controller vorgesehen ist, welcher Informationen auf Grundlage einer komplexeren digitalen Codierung auswerten kann. Darüber hinaus kann auch der Gleichspannungsanteil in der Versorgungsspannung als Grundlage für Steuerfunktionen verwendet werden.

Beispielsweise kann auch Elektronisches Vorschaltgerät 52 für ein Beleuchtungsgerät 50 einen Controller 60 aufweisen, bei dem die integrierende Schaltung 56 und die differenzierende Schaltung 58 integriert sind. In diesem Fall greift der Controller 60 direkt das Signal am Spannungsteilerabgriff 57 ab. Der Spannungsteilerabgriff 57 kann dabei auch an einen kapazitiven Spannungsteiler oder einen kombinierten Spannungsteiler aufweisend Widerstände und Kondensatoren angeschlossen sein.

Die integrierende Schaltung 56 ist wie gesagt bei diesem Beispiel in den Controller 60 integriert und zwischen den ersten und den zweiten Versorgungsspannungsanschluss 51N, 51L gekoppelt. Sie ist dazu ausgestaltet, ein Ausgangsignal A1 zu erzeugen, welches einen Gleichspannungsanteil der Versorgungsspannung anzeigt. Eine differenzierende Schaltung 58 ist ebenfalls in den Controller 60 integriert und mit der integrierenden Schaltung 56 gekoppelt und dazu ausgestaltet, ein Ausgangssignal A2 zu erzeugen, welches auf die Versorgungsspannung modulierte Steuersignale anzeigt. Der Controller 60 ist dazu ausgestaltet, abhängig von den beiden Ausgangssignalen A1, A2 das Beleuchtungsgerät entsprechend anzusteuern.

Die Variante, das die integrierende Schaltung 56 und die differenzierende Schaltung 58 außerhalb des Controllers 60 angeordnet sind, bietet den Vorteil, dass als Controller 60 vorzugsweise ein verfügbarer Microcontroller eingesetzt werden kann. Allerdings werden hier vorzugsweise zwei Eingänge zum Erfassen der beiden Ausgangssignale A1 und A2 benötigt. Wenn die integrierende Schaltung 56 und die differenzierende Schaltung 58 in den Controller 60 integriert sind, wird der Bedarf an externen Bauteilen verringert es bedarf vorzugsweise nur eines Eingangs zur Überwachung des Spannungsteilerabgriffs 57. Für eine derartige Integration kann es allerdings erforderlich sein, dass hier ein anwendungsspezifischer integrierter Schaltkreis (ASIC) eingesetzt werden muß. Bei einer Integration in einen Controller 60 können die integrierende Schaltung 56 und die differenzierende Schaltung 58 auch digital implementiert sein.

Es versteht sich, dass bei den im Vorangegangenen beschriebenen Ausführungsbeispielen vielfältige Modifikationen möglich sind, ohne vom Umfang der Erfindung abzuweichen. Beispielsweise können einzelnen Schaltungskomponenten durch ähnliche Komponenten mit vergleichbarer Wirkungsweise ersetzt werden. Weiterhin versteht es sich, dass die anhand von Fig. 2 und 3 erläuterten Implementierungen der Vorrichtung zur Modulation der Versorgungsspannung mit den Steuersignalen lediglich beispielhaft sind und andere Vorrichtungen, welche zur Modulation der Versorgungsspannung mit den Steuersignalen geeignet sind, ebenfalls verwendet werden könnten. Obwohl im Zusammenhang mit Fig. 5 ein Beispiel beschrieben wurde, bei welchem die Steuersignale durch Phasenanschnitt auf die Versorgungsspannung aufmoduliert sind, versteht es sich, dass die Modulation der Versorgungsspannung mit den Steuersignalen auch auf andere Art und Weise bewerkstelligt werden könnte, z.B. durch Phasenabschnitt oder Pulsmodulation im Bereich des Scheitelpunkts einer Halbwelle. Weiterhin könnte auch bei Zuführung der Versorgungsspannung in Form einer Gleichspannung diese mit den Steuersignalen, z.B. in Form von Pulsen, moduliert sein.

Gemäß der Erfindung ist auch ein Elektronisches Vorschaltgerät für ein Beleuchtungsgerät vorgesehen, aufweisend eine differenzierende Schaltung, welche zwischen den ersten und den zweiten Versorgungsspannungsanschluss gekoppelt ist und dazu ausgestaltet ist, auf die Versorgungsspannung modulierte digitale Steuersignale zu erkennen, wobei die digitalen Steuersignale durch Phasenanschnitt und/oder Phasenabschnitt auf die Versorgungsspannung moduliert werden. Die digitalen Steuersignale durch Phasenanschnitt und/oder Phasenabschnitt durch eine Vorrichtung 100 auf die Versorgungsspannung moduliert werden.

## Patentansprüche

1. Elektronisches Vorschaltgerät (52) für ein Beleuchtungsgerät (50), umfassend:
einen ersten und einen zweiten Versorgungsspannungsanschluss (51N, 51L) zur Aufnahme einer Versorgungsspannung des Beleuchtungsgeräts (50),
eine integrierende Schaltung (56), welche zwischen den ersten und den zweiten Versorgungsspannungsanschluss (51N, 51L) gekoppelt ist und dazu ausgestaltet ist, ein Ausgangsignal (A1) zu erzeugen, welches einen Gleichspannungsanteil der Versorgungsspannung anzeigt,
**dadurch gekennzeichnet dass**,
das elektronische Vorschaltgerät (52) weiterhin umfasst eine differenzierende Schaltung (58), welche mit der integrierenden Schaltung (56) gekoppelt ist und dazu ausgestaltet ist, ein Ausgangssignal (A2) zu erzeugen, welches auf die Versorgungsspannung modulierte Steuersignale anzeigt,
wobei die integrierende Schaltung (56) einen Spannungsteiler mit einem ersten Widerstand (R11) und einem zweiten Widerstand (R12) umfasst, welche in Reihe zwischen den ersten und den zweiten Versorgungsspannungsanschluss (51N, 51L) gekoppelt sind, und
wobei die differenzierende Schaltung (58) mit einem Spannungsteilerabgriff (57) zwischen dem ersten und dem zweiten Widerstand (R11, R12) der integrierenden Schaltung (56) gekoppelt ist.

2. Elektronisches Vorschaltgerät (52) nach Anspruch 1,
wobei die integrierende Schaltung (56) einen dritten Widerstand (R13) und einen Kondensator (C4) umfasst, welche in Reihe zwischen den Spannungsteilerabgriff (57) und ein Bezugspotenzial gekoppelt sind.

3. Elektronisches Vorschaltgerät (52) nach Anspruch 2,
wobei die integrierende Schaltung (56) einen vierten Widerstand (R14) umfasst, welcher parallel zu dem Kondensator (C4) der integrierenden Schaltung (56) gekoppelt ist.

4. Elektronisches Vorschaltgerät (52) nach einem der vorhergehenden Ansprüche,
wobei die differenzierende Schaltung (58) ein Hochpassfilter mit einem ersten Widerstand (R15) und einem und Kondensator (C5) umfasst, welche zwischen den Spannungsteilerabgriff (57)der integrierenden Schaltung (56) und ein Bezugspotenzial gekoppelt sind.

5. Elektronisches Vorschaltgerät (52) nach Anspruch 4,
wobei die differenzierende Schaltung (58) eine Diode (D15) und einen zweiten Widerstand (R16) umfasst,
wobei die Diode (D15) und der zweite Widerstand (R16) parallel zu dem ersten Widerstand (R15) der differenzierenden Schaltung (58) gekoppelt sind.

6. Elektronisches Vorschaltgerät (52) nach Anspruch 4 oder 5,
wobei die differenzierende Schaltung (58) einen weiteren Widerstand (R17) umfasst, über welchen der Kondensator (C5) der differenzierenden Schaltung (58) mit dem Spannungsteilerabgriff (57) der integrierenden Schaltung (56) gekoppelt ist.

7. Elektronisches Vorschaltgerät (52) nach einem der vorhergehenden Ansprüche, umfassend:
einen Controller (60), welchem das Ausgangssignal (A2) der differenzierenden Schaltung (58) zugeführt ist.

8. Elektronisches Vorschaltgerät (52) nach Anspruch 7,
wobei der Controller (60) dazu ausgestaltet ist, abhängig von dem Ausgangssignal (A2) der differenzierenden Schaltung (58) eine Helligkeitssteuerung und/oder eine Farbsteuerung des Beleuchtungsgeräts zu bewerkstelligen.

9. Elektronisches Vorschaltgerät (52) nach Anspruch 1, wobei die integrierende Schaltung (56) und die differenzierende Schaltung (58) in einen Controller (60) integriert sind und der Controller (60) dazu ausgestaltet ist, abhängig von den beiden Ausgangssignalen (A1, A2) das Beleuchtungsgerät entsprechend anzusteuern.

10. Elektronisches Vorschaltgerät (52) nach einem der vorhergehenden Ansprüche, wobei die Steuersignale durch Vorhandensein oder Fehlen eines vorgegebenen Phasenanschnitts oder Phasenabschnitts codiert sind.

11. System, umfassend:
wenigstens ein Beleuchtungsgerät (50) mit einem elektronischen Vorschaltgerät (52) nach einem der vorhergehenden Ansprüche, und
eine Vorrichtung (100) zur Modulation der Versorgungsspannung mit den Steuersignalen.

## Claims

1. Electronic ballast (52) for a lighting device (50), comprising:
- a first and a second supply voltage connection. (51N, 51L) for receiving a supply voltage for the lighting device (50),
- integrating circuit (56) coupled between the first and second supply voltage terminals (51N, 51L) and designed to generate an output signal (A 1) that is indicative of a DC voltage component of the supply voltage,
**characterized in that**
the electronic ballast (52) further comprises:
- a differentiating circuit (58) that is coupled to the integrating circuit (56) and is designed to generate an output signal (A2) that is indicative of control signals modulated on the supply voltage,
- wherein the integrating circuit (56) comprises a voltage divider having a first resistor (R11) and a second resistor (R12) which are coupled in series between the first and second supply voltage terminals (51N, 51L), and
- wherein the differentiating circuit (58) is coupled to a voltage divider tap-off (57) between the first and second resistors (R11, R12) of the integrating circuit (56).

2. Electronic ballast (52) according to claim 1, wherein the integrating circuit (56) comprises a third resistor (R13) and a capacitor (C4) that are coupled in series between the voltage divider tap-off (57) and a reference potential.

3. Electronic ballast (52) according to claim 2, wherein the integrating circuit (56) comprises a fourth resistor (R14) coupled in parallel with the capacitor (C4) of the integrating circuit (56).

4. Electronic ballast (52) according to any one of the preceding claims, wherein the differentiating circuit (58) comprises a high pass filter having a first resistor (R15) and a capacitor (C5) that are coupled between the voltage divider tap-off (57) of the integrating circuit (56) and a reference potential.

5. Electronic ballast (52) according to claim 4,
- wherein the differentiating circuit (58) comprises a diode (D15) and a second resistor (R16),
- wherein the diode (D15) and the second resistor (R16) are coupled in parallel with the first resistor (R15) of the differentiating circuit (58).

6. Electronic ballast (52) according to claim 4 or 5, wherein the differentiating circuit (58) comprises a further resistor (R17) via which the capacitor (C5) of the differentiating circuit (58) is coupled to the voltage divider tap-off (57) of the integrating circuit (56).

7. Electronic ballast (52) according to any one of the preceding claims, comprising a controller (60) to which the output signal (A2) of the differentiating circuit (58) is supplied.

8. Electronic ballast (52) according to claim 7, wherein the controller (60) is designed to effect brightness control and/or color control of the lighting device as a function of the output signal (A2) of the differentiating circuit (58).

9. Electronic ballast (52) according to claim 1, wherein the integrating circuit (56) and the differentiating circuit (58) are integrated in a controller (60) while the controller (60) is designed to operate in response to the two output signals (A1, A2) to control the lighting device accordingly.

10. Electronic ballast (52) according to any of the preceding claims, wherein the control signals are encoded by the presence or absence of a predetermined phase angle or phase section.

11. System comprising:
- at least one lighting device (50) with an electronic ballast (52) according to one of the preceding claims, and
- a device (100) for modulating the supply voltage with the control signals.

## Revendications

1. Ballast électronique (52) pour un appareil d'éclairage (50), comprenant :
un premier et un deuxième branchements de tension d'alimentation (51N, 51L) pour l'absorption d'une tension d'alimentation de l'appareil d'éclairage (50),
un circuit intégrateur (56) qui est couplé entre les premier et deuxième branchements de tension d'alimentation (51N, 51L) et qui est conçu pour générer un signal de sortie (A1) qui indique une part de tension continue de la tension d'alimentation,
**caractérisé en ce que**
le ballast électronique (52) comprend en outre un circuit différentiel (58) qui est couplé avec le circuit intégré (56) et qui est conçu pour générer un signal de sortie (A2) qui indique des signaux de commande modulés sur la tension d'alimentation,
le circuit intégrateur (56) comprenant un diviseur de tension avec une première résistance (R11) et une deuxième résistance (R12), qui sont couplées en série entre les premier et deuxième branchements de tension d'alimentation (51N, 51L) et
le circuit différentiel (58) étant couplé avec une prise de diviseur de tension (57) entre la première et deuxième résistances (R11, R12) du circuit intégrateur (56).

2. Ballast électronique (52) selon la revendication 1,
le circuit intégrateur (56) comprenant une troisième résistance (R13) et un condensateur (C4), qui sont couplés en série entre la prise du diviseur de tension (57) et un potentiel de référence.

3. Ballast électronique (52) selon la revendication 2,
le circuit intégrateur (56) comprenant une quatrième résistance (R14) qui est couplée parallèlement au condensateur (C4) du circuit intégrateur (56).

4. Ballast électronique (52) selon l'une des revendications précédentes,
le circuit différentiel (58) comprenant un filtre passe-haut avec une première résistance (R15) et un condensateur (C5), qui sont couplés entre la prise du diviseur de tension (57) du circuit intégrateur (56) et un potentiel de référence.

5. Ballast électronique (52) selon la revendication 4,
le circuit différentiel (58) comprenant une diode (D15) et une deuxième résistance (R16),
la diode (D15) et la deuxième résistance (R16) étant couplées parallèlement à la première résistance (R15) du circuit différentiel (58).

6. Ballast électronique (52) selon la revendication 4 ou 5,
le circuit différentiel (58) comprenant une résistance supplémentaire (R17), par l'intermédiaire de laquelle le condensateur (C5) du circuit différentiel (58) est couplé avec la prise du diviseur de tension (57) du circuit intégrateur (56).

7. Ballast électronique (52) selon l'une des revendications précédentes, comprenant :
un contrôleur (60) au niveau duquel est introduit le signal de sortie (A2) du circuit différentiel (58).

8. Ballast électronique (52) selon la revendication 7,
le contrôleur (60) étant conçu pour réaliser, en fonction du signal de sortie (A2) du circuit différentiel (58), un contrôle de la luminosité et/ou un contrôle des couleurs de l'appareil d'éclairage.

9. Ballast électronique (52) selon la revendication 1, le circuit intégrateur (56) et le circuit différentiel (58) étant intégrés dans un contrôleur (60) et le contrôleur (60) étant conçu pour commander l'appareil d'éclairage en fonction des deux signaux de sortie (A1, A2).

10. Ballast électronique (52) selon l'une des revendications précédentes, les signaux de commande étant codés par la présence ou l'absence d'un découpage de phase ou d'une coupure de phase prédéterminée.

11. Système comprenant :
au moins un appareil d'éclairage (50) avec un ballast électronique (52) selon l'une des revendications précédentes et
un dispositif (100) pour la modulation de la tension d'alimentation avec les signaux de commande.
